# EUROPEAN PATENT APPLICATION

(11) **EP 4 704 050 A1**
(43) Date of publication of application: **04.03.2026**
(21) Application number: 25198920.8
(22) Date of filing: 29.08.2025
(51) Int. Cl.: G06V 20/40

(54) **APPARATUS AND METHOD OF VIDEO TRACKING**

(30) Priority: 30.08.2024 GB 202412712; 12.09.2024 GB 202413419
(71) Applicant: Sony Interactive Entertainment Inc., Tokyo 108-0075 (JP)
(72) Inventor: BRISLIN, Simon Andrew St. John, London, W1F 7LP (GB); RYAN, Nicholas Anthony Edward, London, W1F 7LP (GB); SWANN, Andrew, London, W1F 7LP (GB); PANESAR, Pritpal Singh, London, W1F 7LP (GB); WALKER, Andrew William, London, W1F 7LP (GB)
(74) Representative: Fish & Richardson P.C.

(57) **Abstract**

A method of identifying an event that is graphically acknowledged within a sequence of images, comprises the steps of defining one or more regions of respective images in which a graphical indication of acknowledgement will occur, selecting at least a first defined region as a candidate acknowledgement image, and selecting for output one or more of the candidate acknowledgement images, or respective images of the sequence of images that comprise such candidate acknowledgement images.

## Description

The present invention relates to an apparatus and method of video tracking.

The playing of video games has become an increasingly social activity, with users wishing to post their experiences to social media, or share their in game story with friends. However, it can be difficult to simultaneously play a video game and selectively record footage to share, particularly for exciting or surprising content when the main focus of the user will be on reacting to the game.

Furthermore, when seeking to summarise progress within a game, or track events, it can be difficult to identify these events within the many hours of user-directed game content that is generated during play.

Embodiments of the present application seek to address or mitigate these problems.

### SUMMARY OF THE INVENTION

Various aspects and features of the present invention are defined in the appended claims and within the text of the accompanying description.

In a first aspect, a method of identifying an event that is graphically acknowledged within a sequence of images is provided in accordance with claim 1.

In another aspect, a system for identifying an event that is graphically acknowledged within a sequence of images, is provided in accordance with claim 15.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an entertainment device configured as a system for identifying a predetermined event within a sequence of images, in accordance with embodiments of the present description;
- Figures 2A-2D are schematic diagrams of difference measurements between successive images, in accordance with embodiments of the present description;
- Figure 3A is an illustration of images that may result in a false-positive match, in accordance with embodiments of the present description;
- Figure 3B is an illustration of images tested to identify a false-positive match, in accordance with embodiments of the present description;
- Figure 4 is a flow diagram of a method of identifying a scene cut, in accordance with embodiments of the present description; and
- Figure 5 is a flow diagram of a method of identifying a predetermined event within a sequence of images, in accordance with embodiments of the present description.
- Figures 6A-C illustrate a process of identifying notable events within an interactive content, in accordance with embodiments of the present description.
- Figure 7 is a flow diagram of a method of identifying notable events within an interactive content, in accordance with embodiments of the present description.
- Figure 8 is an illustration of an image comprising predetermined regions in which a supplementary event is graphically acknowledged, in accordance with embodiments of the present description.
- Figure 9 is a flow diagram of method of identifying an event that is graphically acknowledged within a sequence of images, in accordance with embodiments of the present description.

### DESCRIPTION OF THE EMBODIMENTS

An apparatus and method of video tracking are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

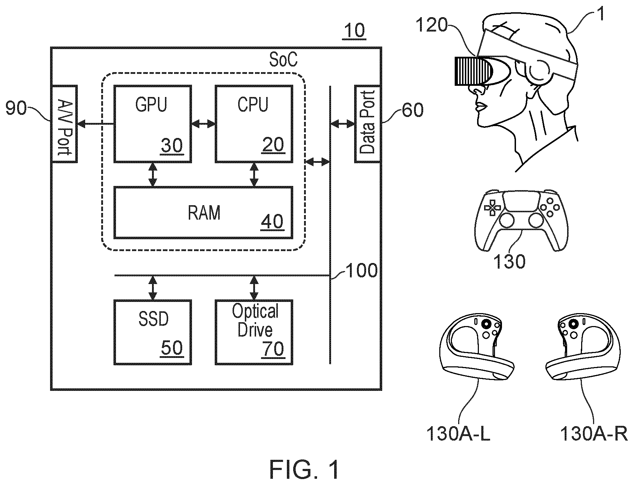

Referring now to the drawings, wherein like reference numerals designate identical or corresponding parts throughout the several views, Figure 1 shows an example apparatus in accordance with embodiments of the present description. As a non-limiting example, the apparatus takes the form of entertainment system 10. Other example apparatuses may include other entertainment systems or videogame consoles, personal computers, phones or tablets, or any device capable of simultaneously playing a videogame and recording footage thereof.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70. Audio/visual outputs from the entertainment device are typically provided through one or more A/V ports 90 or one or more of the data ports 60. Where components are not integrated, they may be connected as appropriate either by a dedicated data link or via a bus 100.

An example of a device for displaying images output by the entertainment system is a head mounted display 'HMD' 120, such as the PlayStation VR 2 'PSVR2', worn by a user 1, or a TV (not shown).

Interaction with the system is typically provided using one or more handheld controllers (130, 130A), such as the DualSense^{®} controller (130) in the case of the PS5, and/or one or more VR controllers (130A-L,R) in the case of the HMD.

### Tracking in-game progress

In videogames, normally the generated / displayed images evolve smoothly as the user moves within the environment of the game. Consequently, normal gameplay is typically not interrupted by cuts between viewpoints. However, such cuts may occur when the game switches to a cut-scene that progresses the story, or when consequences of a certain action are shown. Cuts may also occur when interacting with non-player characters, and also in effect for example when invoking in-game menus such as an inventory or skills menu. Other changes that could be classified as cuts include for games that page between areas (as is common in some 2D platform games and platform adventure so-called 'metroidvania' games), or changes to the player's in-game character's perception, such as switching to a night-vision mode.

As a result, some - but not all - cuts between scenes may be associated with progress within the game.

Hence a first step is to identify cuts between scenes in a robust but computationally cheap manner, and a second step is to evaluate which cuts may correspond to a progress point, predetermined story element, change of location, viewpoint, or character, the start or end of a quest, task, or battle, or collectively and more generally a 'notable event', within the game.

There two steps are now described in more detail.

### Step 1 - Detection of cuts between scenes

Scene cuts can be regular occurrences within TV and Movies, but are less common in video games, where as noted above they typically signal either the start of a so-called 'cut scene', or a different display mode (for example when interacting with a non-player character), or changing a game mode (for example switching to an inventory or other menu, or to a system menu).

It is desirable to identify such scene cuts in a computationally cheap manner.

Consequently, in embodiments of the present description a method of cut detection comprises generating a perceptual hash of the current image frame and then comparing it to a corresponding hash of at least the previous frame.

A perceptual hash is a method of generating a consistent and small representation an image. The resulting hash (unlike a cryptographic hash) is similar for similar images even if they are not identical.

A simple example is as follows:
i. Take the original image and reduce it to a predetermined size; for example 8x8 pixels or 16x16 pixels (though these are non-limiting examples, and a reduced image may for example preserve a known aspect ratio - for example as a 16x9 pixel image). This reduction removes high frequency image features and preserves only the low frequency structure.
ii. This image can then optionally be made greyscale. Using the 8x8 pixel example above, this reduces the representation of the image to just 64 values (a colour version would be 3x64).
iii. In either case, compute the mean of the greyscale, or of each colour channel.
iv. Then generate a bit sequence by setting a bit for each greyscale value (or colour channel value) according to whether it is above or below the mean. In effect this reduces the image to a 64 bit representation of whether parts of the image are darker than average or lighter than average. The colour version would have 3x64 bits.
v. Finally, optionally construct the hash by turning the 64 bits into a 64-bit integer, using any predetermined and consistent order of the bits. As a non-limiting example from an 8x8 image, the bits could be read left to right, top to bottom, generating an integer using the big-endian convention. A 16x16 bit image would similarly result in a 256 bit hash.

So in summary, the hash process comprises initially removing high frequencies / retaining low frequencies, typically by reducing image size. Then, optionally but preferably reducing colour for example to a greyscale, and then encoding variations in the greyscale image (for example as a binary threshold based on a global mean). The resulting encoding can then be stored as-is as a binary string, or as a hash integer.

A similar perceptual hash aims to achieve the same goal but using the frequency domain, as follows:
i. Again, the original image is reduced in size, but optionally not to the same extent as the first example; for example to a 32x32 image (i.e. roughly 4 times bigger than in the first example). This removes some high frequency elements but not to the same extent as the first example.
ii. Optionally reduce the colour to a greyscale again.
iii. Compute a discrete cosine transform (DCT) of the image (e.g. to generate a 32x32 DCT representing the image in frequencies). Note that reducing the image to 32x32 pixels is primarily done to simplify the DCT calculation; a larger image (e.g. 64x64, or 128x128, or indeed at the native resolution) could similarly be used but would impose an unnecessary computational burden.
iv. Retain only the top left 8x8 values (or from whichever corner corresponds to DC / low frequency); these represent the lowest frequencies in the picture. Hence at this point the frequencies retained by both this technique and the first example are roughly the same, but in this technique the process is performed in the frequency domain and so frequencies are more accurately represented.
v. Again compute the average value of these 8x8 DCT values, this time excluding the first (DC) term, which can be very different to the others.
vi. Again generate a bit sequence by setting a bit for each of the 8x8 DCT values according to whether it is above or below the mean. Again this therefore results in a 64 bit representation that this time indicates the relative presence or absence of low frequency image components.
vii. Finally, again optionally construct the hash by turning the 64 bits into a 64-bit integer using any predetermined and consistent order of the bits. In this case optionally the bits could be read emanating from the corner (DC) position, e.g. (1,1)(2,1)(2,2)(1,2)(3,1)(3,2)(3,3)(2,3)(1,3) and so on using the big-endian convention; this would mean that the lowest frequency elements within the image have the largest impact on the value of the resulting hash number. Again, alternatively 16x16 DCT values could be similarly used to generate a 256 bit hash.

So the two approaches are basically the same, but one computes the hash in the spatial domain (using the reduced picture) and one computes the hash in the frequency domain (using the reduced DCT).

A similar approach in the frequency domain may substitute a wavelet transform for the DCT.

As noted above, 8x8, 16x16 and 32x32 reduced representation 'images' are non-limiting examples only, but are sufficient to characterise the source images in order to detect the relative similarity of successive images.

For successive images, a respective hash is generated using one of the spatial or frequency based approaches above (that is to say, one of these approaches is used consistently). Each hash is then compared at least with the hash of the immediately preceding hash.

This can be done simply by deducting the value of one hash from the other - for example for identical images, hash_t2 - hash_t1 = 0.

Typically for successive images in a video, the hashes will differ. Hence in an example, example hash_t2 - hash_t1 = 20, meaning the difference in the 64-bit values of the hashes is 20.

Where the resulting bit sequence after deduction is treated as a number, this will place greater emphasis on earlier bits in the sequence. For example in the frequency domain version, the values of the bits may thus be considered to have different weights that affects the significance of differences in some bits more than others. The bit ordering scheme disclosed elsewhere herein for the frequency domain hash is an example where the bits related to the lowest frequency features have the highest weight (i.e. the lowest frequency bits become the highest significance bits) so that the change in hash values roughly correlates with structural changes in the image.

Alternatively to interpreting the result as a binary number, the number of different bits in the hashes can just be counted, so that each one has an equal weighting. This may be used for example for a hash based on spatial properties of the image (or indeed for the frequency domain version). Alternatively a different weighting scheme may be used that does not correspond to the weightings implicit in a binary number representation of the hash (e.g. one that has a more gentle weighting in favour of lower frequency DCT components).

In principle, a naive threshold for when successive images correspond to a cut between scenes is when 50% of the bits change (since for uncorrelated images one might assume that there is an even chance of each feature being either above or below the mean threshold and hence a 50/50 change of this being the same between two images).

Hence for a 64 bit sequence, the threshold could be a hamming distance of 32 (i.e. 32 bits that are different values between the hashes of the two images).

Using the hamming distance means that converting the bits into an actual hash number is not necessary (although it may be a convenient way to store the bits), so in effect the 64 bit sequence may not need to be treated as, and operated upon as, a number.

It is possible that for some forms of content there are certain features that tend to persist between scenes, such as long horizontal features e.g. of ground/sky or of floor/wall; for example when looking at different parts of a football pitch. Consequently optionally a weighted hamming distance may be used that alters the contribution of certain bits in either the spatial or frequency based hashes. These bits can be determined empirically. However, such a weighting makes the assessment of the hashes more complex, and for cuts between scenes typically an unweighted comparison may be sufficient. Nevertheless, a threshold hamming distance other than 32 / 50% may be empirically determined in practice, for example based upon the type of content, or the genre or even specific title of game.

In any event, the hash / perceptual hash (hereafter collectively 'hash') is a fast, robust, and low-overhead means to detect a significant differences between successive images.

A noted previously, a cut scene can be detected based on comparing a current hash to an immediately preceding hash, but this may result in the problem that instantaneous events such as a lightning flash or explosion in-game may be misinterpreted as cuts between scenes.

Hence optionally, a comparison over a sequence of images may optionally be used, where the sequence may comprise a number of images suitable to distinguish over in-scene transitory events such as camera flashes, or optionally explosions.

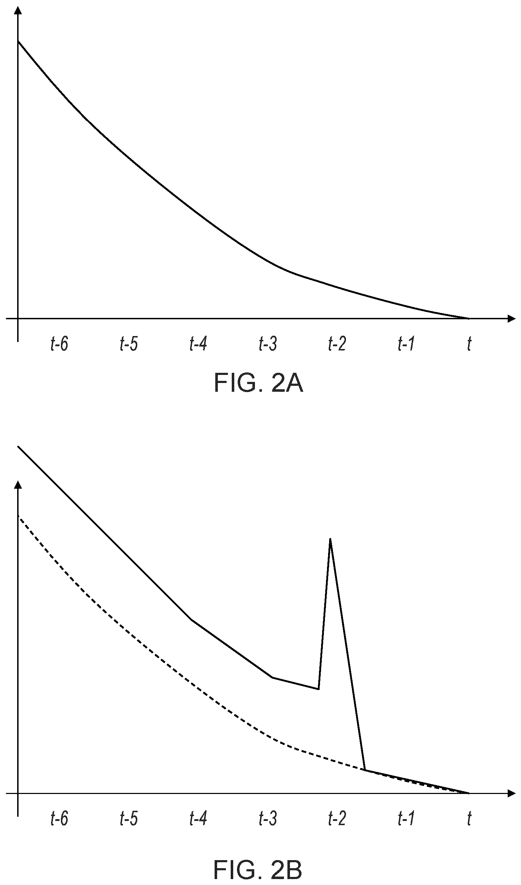

Referring now to figures 2A-C, in each case the x-axis refers to time (for example in terms of image frames counting back in time from current frame 't', and the y-axis refers to the hamming difference between adjacent image hashes.

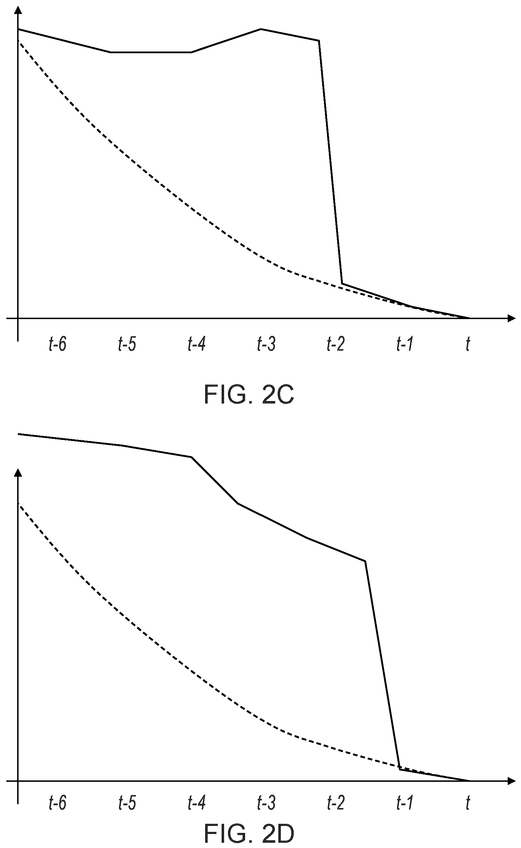

Figure 2A shows the difference between the hash for image frame t and the hash for preceding image frames within a single scene. One can see a gradual increase in difference as the scene evolves. Meanwhile Figure 2B shows an in-scene event that occurred at frame t-2 (e.g. an explosion). In this case there is a notable difference with the hash of that frame, but differences with hashes of earlier frames again show a gradual increase in difference (here with a notional offset reflecting persistent differences in the visible scene caused by the explosion in frame t-2). Finally, Figure 2C shows a genuine scene cut occurring at frame t-2. In effect, frame t-2 is uncorrelated with frame t and so the hamming distance jumps immediately to a value near 50%, and, since the earlier images in that other scene are similarly uncorrelated, the distance for those images (with some noise) are also near a hamming distance of 50% (or whatever the empirical threshold is determined to be). Consequently frame t-2 can be identified as the boundary of a scene cut.

Hence a scene change can be identified by detecting a step function in the hamming distance between the perceptual hashes of the current and N earlier image frames, where N is 2 or more (i.e. to capture a scene change at time t-1). Longer values of N given greater certainty of a scene change, up to a value of N where the scene change was long enough ago that changes in the current scene have accumulated to the point that hashes from the start of the current scene and now similarly approach a hamming distance of 50% - hence for example in the entirely exemplary scenario shown in Figures 2A-C, once the current scene is 6 frames old, it cannot be distinguished from a cut (compare in Figure 2C for example the hamming distance represented by the dotted line corresponding to the old scene from Figure 2A with the values from a scene prior to the cut represented by the solid line).

This upper bound for N may be determined empirically, or alternatively a value of N that encompasses the transitory events of the content as exemplified by Figure 2B may be used instead. Hence for example if a typical explosion is determined to last 10 frames +/- 2 frames, then optionally a value of N=15 may be used.

Finally, it will be noted that when the 'explosion' frame in Figure 2B is the current frame, then all the preceding frames look quite different, and this could be mistaken for a scene cut; this is illustrated in Figure 2D (here the explosion in frame t makes all the earlier frames in the scene look different, although there is still some correlation) . Hence again it may be preferable for the value of N to encompass the transitory events of the content as exemplified by Figure 2B, so that the current frame and preferably two or more older frames are on either side of the transitory event.

Alternatively or in addition, optionally the scene boundary represented by the step function should only be identified at a frame M or earlier (e.g. at least t-2 or earlier) as this excludes an apparent boundary caused by a current frame being a transitory event, and requires at least the preceding frames t-1 to also differ from t-2 (or more generally for the frame t-(M-1) to differ from frame t-M).

Alternatively or in addition, the scene boundary may require a sufficient difference relative to the differences for the N or M neighbouring frames; in other words, the threshold difference between images may itself be relative to the differences (e.g. an average of the differences) between other neighbouring image pairs, optionally as well as subject to a minimum absolute difference threshold based on a predetermined value or a longer term average inter-image difference. In this way the detection can calibrate itself the kinetic nature of the game or the current scene. Optionally the differences between frames can also be analysed for a change in the hash difference pattern (or whatever image or image abstraction is being used for comparison purposes); for a kinetic but continuously evolving scene, the differences in hash values (e.g. as a 2D array) are likely to look similar because the hash values will look similar; the differences will relate to the evolving changes and hence tend to be similar or neighbour the differences in the preceding comparison. By contrast a true scene change will tend to be uncorrelated between successive images, and so the successive hash values will also be uncorrelated and hence have a higher ratio of different or non-adjacent 0s and 1s. Hence a second-order comparison of hash differences can also be used to detect the nature of the difference in hash values, as an optional further indicator of a scene cut.

### Variant embodiments for detection of cuts between scenes

Alternatively or in addition to the whole image frame, the image frame may be split into subsections, such as for example a left half and a right half. This can then be used to detect a common cut between points of view in a conversation; the overall background may be similar between viewpoints, but the person framed in shot will switch from left to right; for the perspective of a half image, this will resemble a scene cut.

Similarly the central third of the image may be ignored (for example replaced with an mid-value grey in the reduced 8x8 or 32x32 image) so that significant changes (such as explosions and jump scares) are typically discounted. Meanwhile changes to the scene as a whole, such as a cut from an exterior to an interior, or from the game environment to a menu, can still be detected.

Alternatively to the technique being applied to every image, or comparing a current image to the immediately preceding image, optionally the techniques herein may be applied to every S images, where *S* is 2, 3, or more, optionally empirically determined based on what cumulative change over S images is distinguishable from a substantially complete change of content as in a scene cut. Optionally S could be equivalent number of frames in a second.

### Summary of scene cut detection

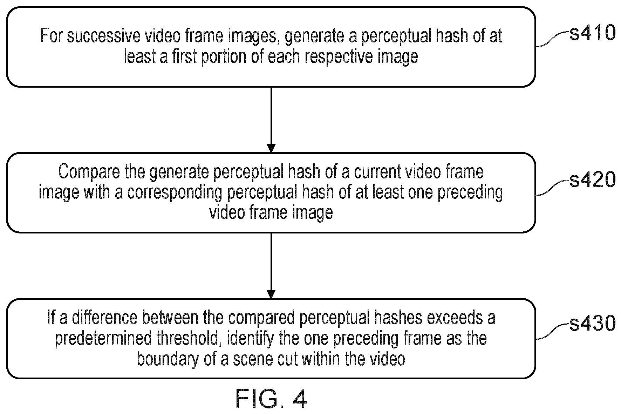

In a summary embodiment of the present description, referring now to Figure 4 a preliminary method comprises identifying scene cuts within a video (either pre-recorded or generated by a videogame), and the method comprises the steps of:
- In a first step s410, for each video frame image, generate a hash (e.g. perceptual hash) of at least a first portion of a respective image, as described elsewhere herein;
- In a second step s420, compare the generated hash of a current video frame image with a corresponding perceptual hash of at least one preceding video frame image (e.g. the immediately preceding video frame), as described elsewhere herein; and
- In a third step s430, if a difference between the compared hashes exceeds a predetermined threshold, identify the one preceding video frame as the boundary of a scene cut within the video, as described elsewhere herein.

It will be apparent to a person skilled in the art that variations in the above method corresponding to operation of the various embodiments of the apparatus as described and claimed herein are considered within the scope of the present invention, including but not limited to that:
- the perceptual hash is based on spatial features of a video frame image;
- the perceptual hash is based on frequency features of a video frame image;
- the perceptual hash of the current video frame image is compared with N preceding video frame images, where N is at least 2;
   - in this case, optionally the step of identifying the one preceding video frame as the boundary of a scene cut within the video comprises detecting a step function in the difference between the perceptual hash of the current video frame image and of the N preceding video frame images, that occurs at the one preceding video frame; and
- the at least a first portion of a respective image is one or more of a left and a right half of the image, and the image excluding a central portion.

### Step 2 - Identifying cuts for notable events

The process of identifying cuts between scenes in step 1 serves to identify candidate moments in the game for further evaluation.

Step 1 provides a hash that has been identified as representing an image from a new scene (i.e. one that scores sufficiently differently to a preceding image or set of N images).

Optionally it can also provide a hash from the preceding scene (i.e. the hash of the earlier image that was deemed different). Hence step 1 can provide both an indication of a cut between scenes and the before / after image representations.

For step 2, as a preparatory process an operator (e.g. the developer or publisher) identifies scene cuts in the game that correspond to notable events (e.g. progress the story, or start / end quests or levels, or the like). Hashes for images from these notable cuts are computed in a similar manner to those described previously and are then stored in a database. This database can be subsequently stored locally to the game for local interrogation, or optionally on a remote server configured to receive interrogation requests. It will be appreciated that because the hashes are so small, even a database comprising several hundred events would only occupy a couple of dozen kilobytes of storage.

The images corresponding to the notable cut do not need to be the image immediately following the cut; for example some cuts may involve fading in from black, or an initial scene setting moment such as an object clearing out of the way to reveal a new scene. Whilst these in themselves are images capable of being represented as hashes, they may have comparatively fewer features to reliably generate a unique or semi-unique hash from.

Hence for example an image from 10 frames, or one second, or a similar short period after the change of scene may be chosen. The period may in part depend on aspects of the game such as how long introductory text is visible on screen, or how long a fade-in sequence takes before images look normal for the game. In any event, optionally therefore the images used in the database may not be those that immediately follow a cut, but may be from shortly thereafter. If so, then similarly the hash to be provided for comparison with the database should come from a comparable period after the cut scene has been detected. Optionally only one hash may be sent for comparison, but preferably a sequence may be sent that encompasses the expected moment for hash to have been generated if in the database, and the best match in the sequence is then used. This allows for slight misalignments of time that may occur e.g. due to different frame-rates, memory or storage access delays, and the like.

Thus in summary, a database of hashes is compiled for representative images corresponding to notable events in the game, the representative images occurring at or shortly after scene cuts (or more generally above-threshold changes in image content, optionally with a change that persists for at least N frames).

The relevant event is associated with its hash in the database, either as descriptive text and/or as an ID, for example an ID usable by a help system or activity tracking system of the entertainment device's operating system.

When scene cut or equivalently an above-threshold change in image content is detected in the game, a hash or series of hashes for images around the time expected for a database image to have been created are compared with the database, and the best match is found.

If this match meets a threshold (e.g. fewer than P bits are different in the hash, where P is a positive match threshold), then the notable event is deemed to have occurred in the game.

If there is no match, or no match above this threshold, then the scene cut is assumed not to be related to a notable event.

In this way, progress within a game can be tracked by following just the video output of the game.

### Key point detection

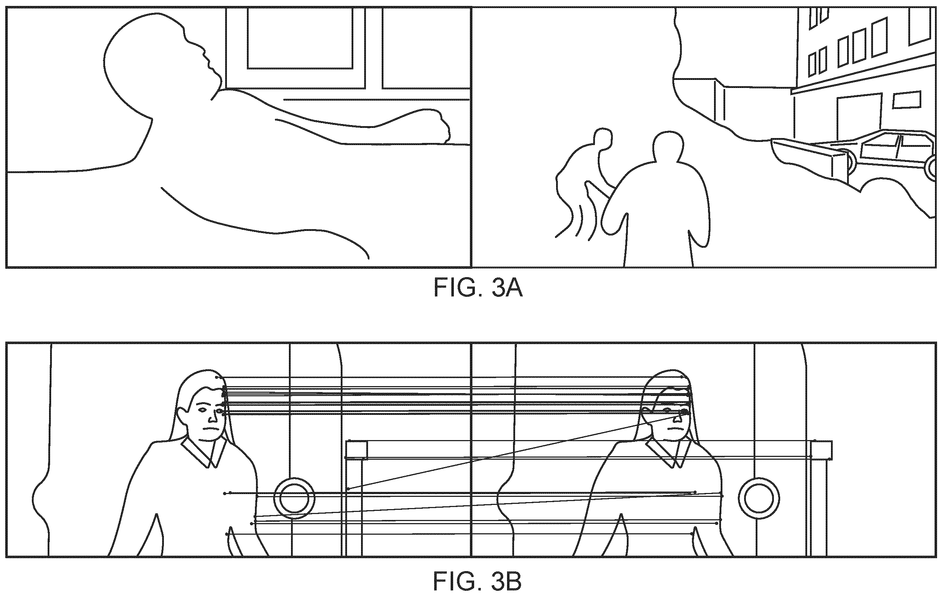

Referring now also to Figure 3, there is scope for the hash scheme to generate similar values for images that are structurally similar but have different content, such as for example the two images juxtaposed in Figure 3A.

In this case it is possible that a hash for the image on the left would achieve a positive match for a corresponding hash for the image on the right, depending on the positive match threshold used. In particular for a game where certain environments, characters, objects, textures or the like are revisited or re-used, this may result in some false-positive identifications of notable events in the database.

It will be appreciate that nevertheless, within the limited window of time following a detected scene cut the likelihood of such a match occurring is relatively low. Therefore it would be desirable for any cross-check of the perceptual hash scheme to also have a relatively low computational overhead.

Accordingly, and referring now also to Figure 3B, optionally for the images corresponding to the hashes in the database, a set of K key points may be generated, where K is for example between 10 and 100.

These key points may be generated using any suitable image quantification process, such as for example generating the top K points with a maximum change in adjacent pixel values in one or more directions; this is likely to capture crisp, high contrast edges of the image. Other criteria could be the brightest point(s), rarest colour point(s) or a point corresponding to a centroid or left- or right-most limit of an object or region of colour. Further criteria will be apparent to the skilled person.

Optionally, for the chosen criterion, they could be the top point(s) in each of K separate segments of the image, so that more parts of the image are likely to be assessed. These K segments may not represent all of the image, so that not all pixels need to be evaluated. Alternatively or in addition the parts of the image to be assessed can exclude regions that may be problematic to the key point detection technique; for example, omitting the bottom 10, 15, or 20% of the image as this is where subtitles might (or might not) be included, possibly in different languages. This therefore prevents from consideration high contrast image content that may significantly differ (or be absent) between otherwise identical moments in the game. Other regions that can differ for otherwise identical moments include user interface elements such as a health bar, equipped item icons, and the like. Accordingly, the parts of the image to be assessed can exclude regions containing such UI elements, either by generally excluding 10, 15, or 20% of the outer region of the whole image, or by excluding regions specific to the game title, for example based on a title specific configuration file. Optionally such approaches can also be used when generating the hashes as well.

Alternatively or in addition, key points can assessed only for a sub-sample of each image or segments thereof, for example only considering one particular pixel out of a square of four, nine, or sixteen pixels in the image, to further reduce the computational overhead.

These key-points are thus content specific and rely on high-frequency features of the image (the sort of features lost in the hashing process). As such they can act as a complementary check of the image, applied after it has been positively matched using the hash process; this limits the computational overhead of evaluating key points of the image from the current instance of the game as it is only performed when a match has been found using the hashes.

As illustrated in Figure 3B, the check is performed by using the same key point generation criteria on the matched image from the game as was or were used on the image in the database (in this case, maximum left-to-right change in pixel value); the coordinates of the K key points are stored in the database, and compared with the coordinates of the K key points generated for the current matched image, e.g. based on median distance between corresponding points. Optionally a predetermined number or proportion of the points with the highest differences can be discounted as outliers, as there may be marginal candidate points that are or are not selected based on very small differences in the image.

If the median distance is less than a threshold value, then the image is confirmed as a positive match. If not, it is treated as a false positive and discarded. In practice the median distance can be fairly large and still distinguish scenes that are wholly different except for their low frequency structure. This makes the process relatively robust to differences in character costume, for example. However, it may not be appropriate for all games, or for all parts of a game (for example due to significant costume customisation being available), in which case even if used elsewhere in the game, it's lack of suitability for a specific event can be signalled by not including the constellation of key points for that event's image in the database.

### Variant embodiments for identifying cuts for notable events

Whilst generating hashes is computationally efficient, comparing a hash against potentially hundreds of hashes in a game database still uses computer resources - and if a series of hashes are compared with those hundreds of hashes then the computation overhead of identifying a notable event becomes larger. Given that this is likely to happen when a scene has changed an hence when other background processes relating to accessing new game assets etc. are likely to be occurring, this is particularly undesirable.

Accordingly, the database and the search processes may be fine-tuned to reduce computational cost (and time spent searching) further.

Firstly, the database may be organised chronologically, either overall or within quests or regions, and/or may be (re)organised according to observed most frequent event sequences among a corpus of players (e.g. play-testers or early access players). The database can then be searched first from a particular point corresponding to where chronologically or in sequence the user is in the game; this is likely to result in a match that meets the positive match threshold more quickly, if one exists, and much less likely to require comparing a large number of candidate hashes. Optionally events in the database can also include pointers to other events, so that common out-of-sequence alternatives can also be quickly assessed as individual exceptions to this approach.

In addition, the database may include a 'matched' flag for its hashes - consequently once a hash in the database has been found, it is not necessary to compare with that hash again. This can also assist with determining where to start a search for the next matching hash within a chronological or sequential set of hashed events within the game, quest, region, etc., e.g. by starting with the first hash not yet found. This position within the database can also be stored to facilitate jumping in at the right point. Locations within the database can also be associated with save points and the like, if these are known to correlate with certain events.

When comparing a sequence of hashes, optionally rather than trying all of them against the database, a representative hash (e.g. of the middle image, or the image most likely to coincide with the timing of the hashed image in the database) can be used as a test hash; in this case the test hash can also search the database using any of the techniques above, but with the assumption that is may not be the best possible match within the sequence. Accordingly if the test hash meets a lower, candidate match criterion for a hash in the database (e.g. fewer than Q bits are different in the hash, where Q is a candidate match threshold and indicates more different bits that the P positive match threshold), then all the hashes in the sequence can be compared with that hash in the database, and the one with the best match (if it also meets the positive match threshold) will be identified as the relevant in-game moment. In this way a representative image from a sequence can go through the database efficiently and the full sequence of hashes is only evaluated against a hash in the database if a match appears possible.

The database may contain other flags, including but not limited to one or more selected from the list consisting of:
- Story flags, indicating that an event is particularly relevant to the story or plot;
- Achievement flags, indicating that an event is particularly relevant to an achievement;
- Failure flags, for example indicating the occurrence of a death screen;
- Save point flags, indicating to generate a game save-file; and
- Save clip flags, indicating to archive a section of video encompassing the event.

This can allow the entertainment device to evaluate what to do when an event is identified; for example not all events that are relevant to the plot may warrant creating a save file as well, and not every event may be associated with an achievement. These different flags may therefore assist when creating different content or reports for the user and/or for sharing, such as a story recap, or sharing successes with friends. Optionally some events such as player death may not have a 'found' flag, or it may be locked as not found, so that the event can be identified multiple times.

It will also be appreciated that more than one database may be used - for example different databases may be used for different areas of the game, or for different character selections, story branches, or the like. Similarly parallel instances of the database(s) may be provided for different player accounts on the same entertainment device, or parallel sets of flags within the same database, depending on implementation.

It will be appreciated that whilst the computational overhead is low, it is not necessary to perform the whole process during the period of a single frame - the task can be a background one that is completed over a number of frames, since events are rare compared to the occurrence of individual frames.

Whilst the above techniques describe using perceptual hashes and optionally key points to abstract, characterise, or fingerprint current images and database images to enable efficient comparisons, in principle the images themselves could be used for comparison purposes (either at original or reduced resolution), if storage and computational resources permit.

### Variant embodiments for notable event identification

The techniques herein describe detecting scene cuts based on a change in image content for successive images that exceeds a predetermined threshold, typically where the change is evaluated between perceptual hashes of those images. This allows for cuts to be detected by virtue of their instantaneous nature, in contrast to the ongoing evolution of a scene during normal game progression. This approach works when the comparisons are for immediately successive images, and can work for images separated by one or more intervening images (i.e. a subsample of images), up to a point where the correlation between the subsampled images starts to get lost and instead appear to look more like different scenes.

In other words, there is a practical limit to how sparsely the successive images can be sampled from the stream of generated image using the above technique. However, it will be appreciated that sampling fewer images could reduce computational and memory overheads.

Conversely however, it will also be appreciated that if one only sampled, for instance, every 30^{th} frame (in a 60 frame per second image generation sequence), i.e. every half second, or event every second, the sampled frames are likely to be very different to each other and so the detection of cuts and so the detection of cuts would no longer be possible using the technique of comparing perceptual hashes of successive sampled images for a threshold difference.

Hence in this case, where the sample period is too long to reliably detect a cut, an alternative approach may be considered:
In embodiments of the present description, images are periodically sampled (e.g. every half second or second), and processed as before to generate a perceptual hash and optionally also key points.

The perceptual hash is then compared with the hashes in the database - using any of the techniques herein - to identify any match. Optionally because the sample image may be more variable relative to actual scene cut compared to an image selected in response to active detection of the scene cut, and hence the sample image may not correspond exactly to the image represented in the database, the predetermined threshold for denoting a match may be lower in this case.

The periodic sampling may optionally include variability based on current computational or memory load; for example if the notional period is every 30 frames, then the first frame in the 25-30^{th} frame in which a computational and/or memory overhead of predetermined capacity was available would be the frame in which the techniques herein would be implemented. This reduces the risk of the resource requirements of the process clashing with those of a high-demand video frame. The precise frame window position and length may be determined empirically for the intended periodicity.

It will be appreciated that the techniques herein comprise two main phases; obtaining and processing current images to create perceptual hashes, and comparing these with one or more reference databases. When actively searching for scene cuts to detect candidate event images, there is a greater resource requirement for image processing, but relatively few instances of comparison with the database (since this will only occur when a cut is detected). By contrast when only using a sample image every 1 or ½ second irrespective of a cut, there is less image processing overall, but the database is interrogated every time and potentially more completely since there is statistically less likely to be a detected match for any given candidate image and so strategies for reducing the comparisons are not likely to see much benefit. Therefore which approach to use may depend of the image processing capacity of the system and/or the size of the database or databases.

It will also be appreciated that this variant approach may therefore benefit from the use of multiple smaller databases, e.g. quest or level / location dependent. Hence a step of obtaining a database of data items may comprise obtaining one of a plurality of databases, responsive to the predetermined events it contains, and data identifying a state of a source of the sequence of images (i.e. the game state such as the quest or level / location, or e.g. the identify of a programme episode if the images are from a pre-recorded media series or the like).

It will be appreciated that both approaches may be used interchangeably, for example depending on the database size, the available processing / memory resources, or the like, which can vary dynamically within a single game, or between different game titles.

### Uses for identified notable events

As noted above, a number of reports and digests may be possible based on these events, as well as actions such as saving the game state of a video clip.

Hence identified events may be used to trigger one or more further actions in or for the game. For example, a save game might be automatically generated. This can also be used to easily update save points once a game has been released, by making an updated database available.

In another example, at least some of the user's in-game statistics may be captured at this point; this can allow for comparisons of progress throughout the game, or add further context to a subsequent summarisation; for example saying ('When <player> entered the city, she was at full health, but only had 3 dollars to her name').

Such a summarisation system is outside the scope of this application but may for example identify specific statistics to include for some events, and/or look for relative outliers in the player's statistics when compared to a wider corpus of other players at the same point in-game, to identify interesting differences.

The identified events can also be used to tag video being recorded on a loop during game play, so that if it is subsequently searched for (either within the loop or if subsequently archived) it can easily be found.

Such tagging can also be used to selectively archive video clips that capture such notable moments, to assist with a summary of game play or a recap to help remind the player of what has happened, for example if they have been on holiday and not played the game for a while.

Other uses will be apparent to the skilled person, such as providing telemetry for the developer or publisher - for example providing information, across a corpus of players, relating to preferred routes or sequences, sections that take longer or shorter than expected to complete (or vary based on other criteria such as player age), and sections that appear to be where players stop playing the game (if other than after completion). Such information can help the developer improve the game in subsequent updates or sequels.

In addition to analysing game images whilst being generated by an entertainment device, it will be appreciated that this approach can also be used on videos uploaded to hosting sites such as YouTube^{®} and Twitch^{®}. Accordingly it becomes possible to automatically catalogue what parts of a game a given video encompasses. This can enable a subsequent viewer to access more useful videos or parts of videos.

For example, if a user is stuck on a particular part of the game, a help option could send a search request to one or more online video hosting sites such as those mentioned above, and/or a site dedicated to providing help videos and walkthroughs, and receive one or more hits for videos or parts thereof that correspond to the part of the game they are in. This avoids the need for the user themselves to know or understand what part of the game they are in, or how to phrase this in a way that would generate relevant results on a search. It can also allow users to find videos posted (and described by) people using different languages, because the event identification via the database is not language dependent.

### Summary of notable event detection

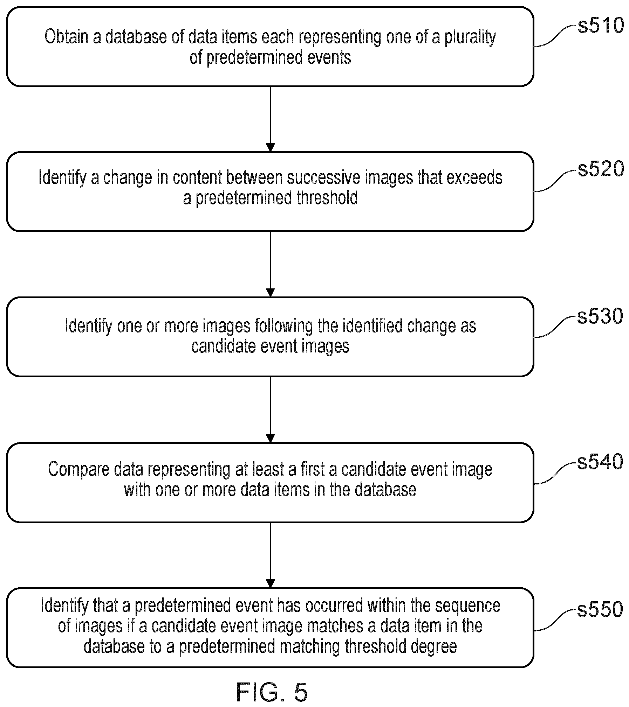

Referring now to Figure 5, in a summary embodiment of the present description, a method of identifying a predetermined event within a sequence of images comprising the following steps.

In a first step s510, obtaining a database of data items each representing one of a plurality of predetermined events, as described elsewhere herein.

In a next step, identifying candidate event images within the sequence of images. Optionally this can take the form of the following second and third steps (as shown in Figure 5):
In a second step s520, identifying a change in content between successive images that exceeds a predetermined threshold (e.g. a scene cut), as described elsewhere herein;

In a third step s530, identifying one or more images following the identified change as candidate event images, as described elsewhere herein;

Alternatively, optionally it can take the form of selecting individual images separated by a plurality of images in the sequence of images as candidate event images (e.g. periodically or semi-periodically based on resource availability, as described elsewhere herein).

In a fourth step s540, comparing data representing at least a first a candidate event image with one or more data items in the database, as described elsewhere herein; and

In a fifth step s550, identifying that a predetermined event has occurred within the sequence of images if a candidate event image matches a data item in the database to a predetermined matching threshold degree (e.g. the positive match threshold), as described elsewhere herein.

It will be apparent to a person skilled in the art that variations in the above method corresponding to operation of the various embodiments of the apparatus as described and claimed herein are considered within the scope of the present invention, including but not limited to that:
- the data items in the database are perceptual hashes of images representing respective predetermined events, and the data representing at least a first a candidate event image is a corresponding perceptual hash, as described elsewhere herein;
   - in this case, optionally the hashes are one of a spatial hash or a frequency domain hash, , as described elsewhere herein;
   - similarly in this case, optionally the step of identifying a change in content comprises identifying a step change in differences between perceptual hashes for at least a part of the sequence of images that persists for a predetermined number of images, as described elsewhere herein (e.g. with respect to Figure 2C);
   - similarly in this case, optionally a perceptual hash is generated for one or more selected from the list consisting of a left or right subsection of an image, a top or bottom subsection of an image, one or more quadrants of an image, and an image excluding a central region thereof, as described elsewhere herein (and hence one image can optionally give rise to several hashes for comparison purposes, in which case the identification may use an AND principle or and OR, principle for matches);
- a data item representing a predetermined event corresponds to an image that occurs a predetermined period after a change in content between successive images that exceeds a predetermined threshold, and the step of identifying one or more images following the identified change as candidate event images is responsive to that predetermined period, as described elsewhere herein;
- the database comprises an event ID for each predetermined event, and the method comprises the step of notifying the event ID of an identified event to one or more selected from the list consisting of a user-help process (e.g. to find help video and/or help text), a game summarisation process (e.g. to generate a story-so-far video and/or text); a social feed process (e.g. to share achievements, failures, and/or notable stats of the user with others), a save-game process; a save video-feed process, and a telemetry process, as described elsewhere herein;
- for each predetermined event, the database comprises one or more flags selected from the list consisting of an event identified flag, a story-related event flag, an achievement related event flag, a failure related event flag, a save game flag, and a save video clip flag, as described elsewhere herein;
- for each image representing a respective predetermined event, the database comprises key point data comprising pixel location data for K pixels of the image that best meet a predetermined criterion, and the method comprises the steps of: if a candidate event image matches a data item in the database to a predetermined threshold degree, then calculating corresponding key point data for that candidate event image, calculating the average difference between pixel locations for at least a subset of pixel locations in the key point data from the candidate event image and the key point data corresponding to the matched data item, and if the average difference exceeds a predetermined difference threshold, rejecting the candidate event image as a false positive, and identifying that the event has not occurred, as described elsewhere herein;
- the predetermined events are ordered within the database according to one or more criteria selected from the list consisting of chronological sequence of occurrence within the game as a whole, chronological sequence of occurrence within one of a region, level, quest, or story branch of the game, empirically measured most likely sequence of occurrence within the game as a whole, and empirically measured most likely sequence of occurrence within one of a region, level, quest, or story branch of the game; and the step of comparing data representing at least a first a candidate event image with one or more data items in the database comprises starting the search within the database at a position responsive to the current game state and the sequence of occurrence used within the database, as described elsewhere herein;
- the database comprises an event identified flag for at least some of the predetermined events, and the step of identifying that an event as having occurred comprises setting the event identified flag, wherein the method comprises the step of not comparing data representing at least a first a candidate event image with a data item in the database for which its event identified flag has been set, as described elsewhere herein;
- a plurality of images following the identified change are candidate event images; and the method comprises the steps of selecting a sample candidate event image from that plurality of candidate event images, comparing data representing the sample candidate event image with one or more data items in the database, identifying that a predetermined event has possibly occurred within the sequence of images the sample candidate event image matches a data item in the database to a predetermined sample threshold degree lower than the predetermined matching threshold degree, comparing data representing the remaining candidate event images with the data items for the event that has possibly occurred, and identifying that this event as having occurred if any of the candidate event image matches the corresponding data item in the database to a predetermined matching threshold degree, as described elsewhere herein; and
- the sequence of images are from a video that has been uploaded to a video hosting site; and the method comprises the step of generating search metadata for the video indicating when within the video at least a subset of identified events have occurred, as described elsewhere herein.

### Identifying supplementary events

Alternatively or in addition to identifying notable events, the techniques herein can be similarly used to detect supplementary events.

A supplementary event can be thought of as one that is not driven by the game (e.g. not a scene-cut caused by a story element, change of location, or character interaction, for example), and is not one driven by the user in the sense of interrupting the game flow (e.g. by accessing an inventory menu, or getting killed in game). As such it may also be thought of as a transitory event that occurs during gameplay.

More typically, it is an optional event that is acknowledged by the game, but not essential to the current progression of game play. Typically this will involve collecting objects of interest, or items of background information, or bonus objects that require more challenging or adroit game play to obtain. Often, performing such optional actions is acknowledged by the game even as gameplay continues.

For example a UI element may appear, to identify the object that has been collected, or at least to acknowledge that an item has been collected. More generally a graphical indicator (for example a star) may briefly appear. More details about the object may then become accessible via in-game menus, but typically accessing such menus is again a user-based event like accessing a journal, which has been described previously herein.

Consequently a supplementary event may similarly be defined as an event that is graphically acknowledged within only a part of the displayed image (e.g. in a predetermined region of the image), typically whilst the rest of the image is displayed as normal and progresses as normal in a sequence.

Hence the techniques described elsewhere herein may be employed, or employed further, to detect when such optional actions are graphically acknowledged by the game (or more generally, the interactive content), and optionally to identify these as another, distinct, set of notable supplementary events.

Accordingly, in embodiments of the present description, the scene cut techniques described elsewhere herein are applied to one or more predetermined regions of each image (or every S images, as described elsewhere herein).

These one or more predetermined regions are where graphical indicators appear in acknowledgement of the supplementary event. Hence when a change in content between successive images, within one or more of the predetermined / defined regions, is identified as exceeding a predetermined threshold, the region(s) can be defined as comprising candidate acknowledgement images (e.g. graphical indicators that acknowledge the supplementary event).

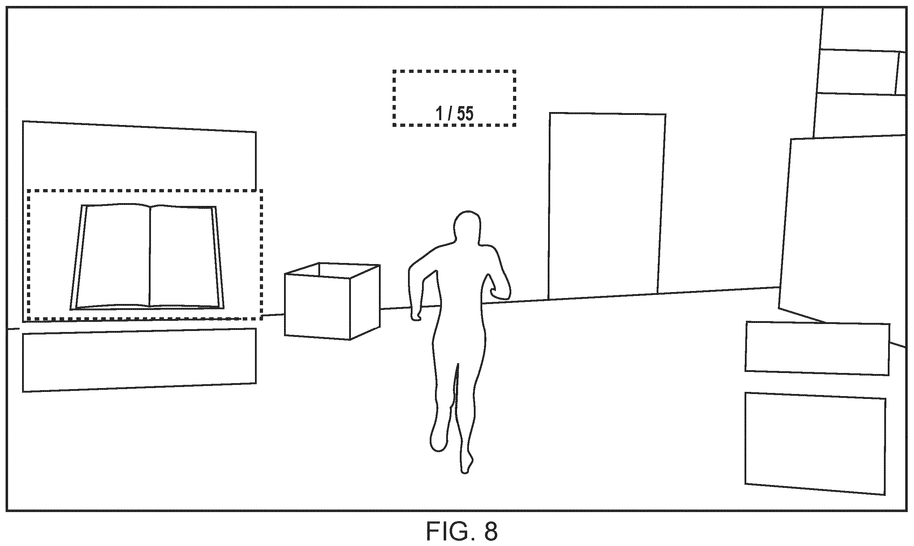

Referring now to Figure 8, when a collectable item is discovered, graphical indicators in this example pop up in two regions of the image, denoted by the dashed borders in Figure 8.

The first region is a the centre-top of the image, and the graphical indicator in this example is fairly generic and merely indicates a growing tally of how many items have been found. In this case, in addition the graphical indicator is partially transparent; this may make it difficult to distinguish from other transitory changes within that region of the overall image, as it still includes uncorrelated content behind it that (for example depending on the current viewpoint of the camera), may comprise greater inter-image changes in image values than the appearance of the semi-transparent pop-up content itself.

Hence, at least to a first approximation, this part of the image may not be suitable for assessment.

By contrast, the second region is to the left of the image, and shows as a graphical indicator a panel with at least three parts. The first (top) part is again semi-transparent. The third (bottom) part is a user-interface component whose appearance is not unique to the collection of items. Meanwhile the second (middle) part, highlighted by dashed lines, does relate to the collection of items and is opaque. Hence in this specific example, this is the region that should preferably be chosen.

More generally, the one or more predetermined regions of the image are those where graphical indicators related (preferably exclusively) to a type of supplementary event are visible (again preferably exclusively, e.g. by not being transparent or being partially occluded by the environment) when an instance of the supplementary event is acknowledged by the game.

These regions can be treated as images in their own right for the purpose of detecting 'scene cuts' using the techniques described herein; when these graphical indicators appear, they resemble scene cuts within the respective regions as they interrupt the ongoing display of the game in that region; hence identifying respective changes in content within these regions of successive images of the footage, that exceed a predetermined threshold, enables these graphical indicators of a supplementary event to be detected, e.g. as pop-ups.

Detected pop-ups can similarly be optionally compared to a database of pop-ups (e.g. again using perceptive hashes, key, points, and the like, or whole image regions or reduced resolution versions thereof) to identify them as indicating predetermined notable supplementary events. Alternatively or in addition other identification methods may be used, as described later herein. For example, as described previously, periodic or semi-periodic comparisons of the region(s) with an appropriate database of reference pop-ups can be used.

In Figure 8, then, when the player encounters a collectable, the portion of the scene in the identified region is replaced by the game with the graphical indicator for the collectable, and this local change of content is analogous to a scene cut. As a result the content within this region for successive images of the footage changes by more than a predetermined threshold at the point, and the graphical indicator for the collectable is detected as a pop-up. As per the techniques elsewhere herein, this inter-frame comparison may use a perceptual hash, and optionally key points, or further optionally a reduced resolution sample of the region (since as a smaller region it may not be as computationally burdensome as the full image).

Optionally the perceptual hash for the region may correspond to the respective part of a spatial perceptual hash of the whole image being used for whole-image scene cuts. Alternatively, the perceptual hash may be generated specifically for the region; in this case the hash may still be 8x8 or 16x16 and hence of a higher effective resolution than an equivalent hash for the whole image.

The hash and optionally the key points for the detected pop-up may then optionally be compared with a database of pop-ups to identify which one it is (e.g. which object has been found, or what type or class of object was found - e.g. a collectable, vs a piece of background information - which may use a consistent graphic such as a piece of paper or a cassette tape). Alternatively as noted previously, whole image regions or reduced resolution versions thereof may be compared with similar versions in a database.

In any event, in this way the detection of a supplementary event, and optionally the identification of a notable supplementary event, may be achieved. Uses for this are again similar to those for event detection using whole images.

However, there are some refinements that can improve the performance for supplementary events even further.

### Region definition

Different games may show their graphical indicators in different places on-screen, and at different sizes, and optionally different shapes. Accordingly, a game may be associated with configuration data providing the information about the predetermined region(s) to use in the game; e.g. position, size, and shape. This configuration data may be supplied with the game, or may be obtained e.g. from a server that holds such data for a plurality of games by requesting it together with an identifier for the game.

Optionally this data may also be coupled to the notable events database, or a actions database, or to save points in the game, if the regions used in the game change at different times.

Similarly, different regions may be identified for different supplementary events; for example collectables may be associated with a region on the left of the image, whilst stars awarded for excellent gameplay are associated with a region at the top of the image.

One advantage of such configuration data is that it can be used to ignore or discount changes to other user interface elements; for example in Figure 8, in the bottom right section of the image there is a map, and also a communication feed from an in-game character. If the communication feed pops up when the character 'calls' the player, or if the map can be summoned and dismissed by the player, then these would behave in a similar manner to pop-ups acknowledging supplementary events; by only considering those graphical acknowledgements within predefined regions set within configuration data, such false positives can be avoided.

If no region definitions are provided, optionally the system can look for sudden inter-image changes consistently appearing in one or more sample regions, for example located in the outer third, quarter, or fifth of the image frame; the sample regions may be relatively small tiles, for example roughly ½ to 1/10^{th} that of the region shown on the left of Figure 8. Once such regions or contiguous block of regions are found, then the system can optionally test interactively to find the effective boundary of the region.

Optionally, if this is done by a user's device, then the device may select only a random subset of sample regions so that it does not overly impact computational resources, and upload the results to the central server; the central server can then collate the results from a plurality of users to determine the regions without explicit definition by the developer of publisher. This can allow for the system to develop automatically either for new games, so-called 'indie' games with limited developer capacity, or legacy games that are otherwise unsupported.

More generally, if the system finds a tile that undergoes a scene cut in a similar manner to the regions described elsewhere herein while the image as a whole does not, then this tile is likely to coincide with a graphical indicator of a supplementary event. If two adjacent tiles undergo a scene cut at the same time, then these tiles are likely to be part of the same graphical indication. This can then be used to trigger other detection schemes, as described elsewhere herein, such as OCR, to further identify the indicated event.

Optionally, were a region is complex, or the graphical indicator comprises a frame to hold an item, then optionally a region mask may be provided for example just to define where the frame will appear. This can make the system more robust; the graphical indicator including the item can then optionally still be compared with a data base to identify the corresponding notable supplementary event, if it exists.

### Cross referencing

Where two regions appear in response to the same supplementary event, they can be used to cross-reference each other, or one can be used to vouch for the other. For example, it was noted previously that the semi-transparent region at the top of figure 8 may not be reliable on its own. However, it may be used to gather information if the region to the left of the image appears at the same time and is detected. The linking or correlation of such regions can also be indicated in configuration data for a game.

As well as cross-referencing to reinforce use of regions such as that above, cross-referencing can also be performed to avoid false-positives.

In particular, it will be appreciated that a whole-image scene cut is also very likely to appear as a scene-cut within predetermined regions of the image, and be miss-characterised as the pop-up of a graphical indicator.

Accordingly, if a scene-cut is detected within one or more predetermined regions of the image, then the system checks whether an overall scene cut has also been detected; if so the regional scene cut(s) are discounted. Conversely, if an overall image analysis is performed first, then if an overall scene cut is detected then the step of detecting the pop-up of a graphical indicator and/or identifying such a pop-up can be skipped.

### Text extraction

In some cases, a graphical indicator includes text, or text is associated with it in a fixed spatial relationship. In Figure 8, there is text in the first region at the top of the image, which as noted above may correlate with the appearance of the second region. Similarly, the pop-up on the left of the image includes elements that are not part of the detected region by have a fixed relation to it; in this case, there is descriptive text in a semi-transparent panel directly above the region explaining both the type of supplementary event and the specific supplementary event, and information about a reward in an opaque panel below the detected region. Any or all of these three areas, and the region itself, or specific sub-areas thereof, may then be subject to optical character recognition ('OCR') to extract useful text.

Again the areas, regions or sub-areas may be defined within configuration data for the game.

Optionally, further information to assist with OCR may be provided, such as 3D plane data; the pop-up on the left of the image is not rectilinear or parallel to the image plane; providing information about this can help the OCR to rectify the text before performing recognition on it.

Similarly, optionally a dictionary of words and optionally phrases used within the game (e.g. for the supplementary events, collectible objects, and the like) may be provided, for example by a developer facilitating the techniques described herein. Such a bespoke dictionary can improve OCR accuracy.

The extracted text can optionally be used alternatively or in addition to image data to reference a database of supplementary events (or notable supplementary events), for example based on descriptive text of the individual event in the pop-up.

Hence optionally the database for supplementary events may not need to store perceptual hashes and optionally key points for some or all entries, if text capable of identifying the event is available instead.

Extracted text can also be used for other purposes, such as when generating a summary of game events and/or achievements, captioning screen or video captures, interrogating or adding to an activity tracking system, or similarly interrogating or adding to a help system.

Alternatively or in addition, extracted text can be used if a pop-up is used for a mixture of graphical acknowledgements and also in-game features; hence for example if an acknowledgement of a collectable item is shown in the same interface as a call from a non-player character, text associated with one or other of these events can be used to distinguish them, and optionally distinguish what is or is not counted as a supplementary event.

### Text Extraction - Variant Embodiments

Whilst text extraction has been described with reference to supplementary events, text may appear in relation to any predetermined event - for example a message saying 'completed quest' may appear whenever a quest has been completed, optionally together with the name of the quest, and further optionally with summary data about the degree of success in completing it.

Typically such messages will again appear within or in association with a consistent graphical indicator such as a frame or an icon. Hence again the techniques for detecting pop-ups described elsewhere herein can be used to detect messages relating to notable events, even when there are no other pop-ups on display.

Again the specific regions (position, size, and/or shape) for a particular message type may be defined in a configuration file associated with the game.

In this case, optionally a perceptual hash is generated for the different predetermined main phrases, such as 'quest started' 'quest completed', 'level unlocked', 'skill increased', and 'you are dead'. In this case, since the text may be superposed on a current background, optionally an average of multiple instances of a given message within the game may be generated to remove the influence of the background before generating a perceptual hash of the region.

The use of a perceptual hash is not essential, but if the technique is also being used by other cut scene and/or pop-up detection processes then may be efficient to use for messages as well. Other matches such as by direct comparison of image data (or a reduced resolution version thereof) may also be considered.

Alternatively OCR could be used directly on the region, optionally not every frame (to reduce computational overhead) but at a periodicity that is shorter than the duration for which such messages are displayed, so that they have a good chance of being detected.

Once the main phrase has been detected as having appeared (and hence acting like a scene-cut within its respective region), optionally OCR can be used in other areas relative to the main phrase to detect any ancillary information known to also be displayed, such as the name of the quest, the unlocked level number, or the like.

### Unlisted supplementary events

Alternatively or in addition to supplementary events provided within the game, some games allow users to post messages or drop objects that are visible to other users. Typically, these will also be displayed within or in association with a consistent graphical indicator such as a frame for text or images, and so the same techniques for pop-ups as described elsewhere herein can be used.

In this case, the specific content of the messages or object drop may not be included in a reference database as they are not known in advance, and for example only a 'player message' or 'player drop' supplementary event may be detected from the graphical indicator. Optionally, these may not be detected at all, or referenced within a database.

Alternatively or in addition, however, as per the text extraction techniques above, the user messages could be read, and any object drop descriptors could be read, via OCR, to provide contextual information or to access a dictionary of terms that may be included in such massages, such as the names of certain enemies, locations, quests, or objects. The messages could then optionally be associated with the events or supplementary events that also relate to those enemies, locations, quests, or objects. For example, a brief clip of a user's warning about an enemy could be included in a clip summary that shortly thereafter shows the player being surprised by that enemy.

### Summary

It will be appreciated that supplementary events or pop-ups, and messages whether from other users or from the game itself, may all be thought of as detected regional scene cuts within part of an image, with the nature of the event associated with the scene cut depending on where in the overall image it occurs, and/or depending on the text and/or graphical indicator(s) displayed.

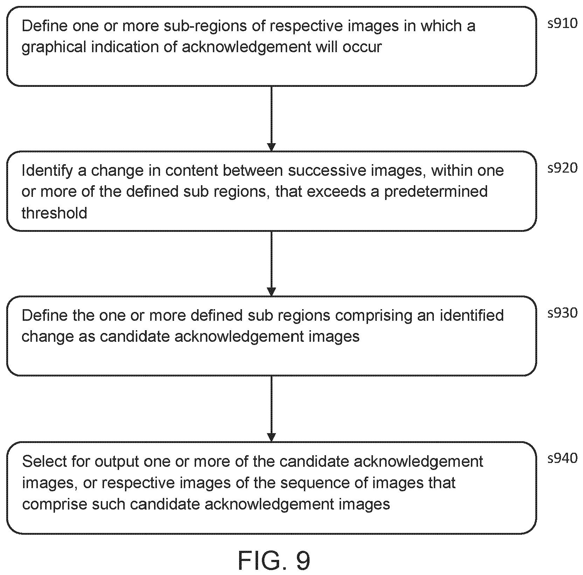

Referring now to Figure 9, in a summary embodiment of the present description, a method of identifying an event that is graphically acknowledged within a sequence of images, comprises the follow steps.

In a first step s910, defining one or more regions (e.g. smaller parts of) of respective images in which a graphical indication of acknowledgement will occur, as described elsewhere herein.

In a next step, selecting at least a first defined region as a candidate acknowledgement image. Optionally this can take the form of the following second and third steps (as shown in Figure 9):
In a second step s920, identifying a change in content between successive images, within one or more of the defined regions, that exceeds a predetermined threshold (e.g. identifying 'scene cuts' within these regions), as described elsewhere herein; and

In a third step s930, defining (selecting) the one or more defined regions comprising an identified change as candidate acknowledgement images, as described elsewhere herein;

Alternatively, optionally it can take the form of selecting at least a first defined region in individual images separated by a plurality of images in the sequence of images as a candidate acknowledgement image, as described elsewhere herein.

In any event, then in a fourth step s940, the method comprises selecting for output one or more of the candidate acknowledgement images, or respective images (e.g. whole images) of the sequence of images that comprise such candidate acknowledgement images, as described elsewhere herein.

It will be apparent to a person skilled in the art that variations in the above method corresponding to operation of the various embodiments of the apparatus as described and claimed herein are considered within the scope of the present invention, including but not limited to that:
- the method comprises the steps of obtaining a database of data items each representing one of a plurality of acknowledged events, comparing data representing at least a first a candidate acknowledgement image with one or more data items in the database, and identifying an acknowledged event for output if the candidate acknowledgement image matches a data item in the database to a predetermined matching threshold degree, as described elsewhere herein;
   - in this instance, optionally the database comprises an event ID for at least some acknowledged events, and the method comprises the step of notifying the event ID of an identified acknowledged event to one or more selected from the list consisting of a user-help process, a game summarisation process, a social feed process, a save-game process, a save video-feed process, and a telemetry process, as described elsewhere herein;
- the data items comprise representations of image regions comprising a graphical acknowledgement of an event, and the data representing at least a first a candidate acknowledgement image is a corresponding representation of a respective image region, as described elsewhere herein;
   - in this instance, optionally the representation of an image region comprises a perceptual hash of that region, as described elsewhere herein;
- the step of defining one or more regions comprises one or more selected from the list consisting of obtaining definitions from region configuration data associated with a content from which the images in the sequence of images are generated, and detecting changes that exceed a predetermined threshold within one or more tiled regions around some or all of a periphery of the images in the sequence of images, as described elsewhere herein;
- the method comprises the steps of detecting whether a change in content between successive whole images exceeds a predetermined threshold at the same time that a change in content within one or more of the defined regions of those images exceeds a predetermined threshold, and if so, not identifying the change in the one or more defined regions as indicating a graphically acknowledged event, as described elsewhere herein;
- the method comprises the steps of if a first region is defined as a candidate acknowledgement image, then performing an analysis on a further, separate defined region of the same image for an indication of graphical acknowledgement of an event (e.g. one that is semi-transparent and harder to detect in its own right), as described elsewhere herein;
- the method comprises the step of recognising text within the candidate acknowledgement image, using one or more selected from the list consisting of a perceptual hash of predetermined text, and optical character recognition, as described elsewhere herein;
- the method comprises the step of storing a predetermined number of adjacent images within the sequence of images, including the image that comprises a selected candidate acknowledgement image, as a video clip of the graphically acknowledged event, as described elsewhere herein; and
- in this instance, optionally the method comprises the step of compiling a summary video comprising a plurality of stored video clips of graphically acknowledged events (e.g. optionally together with clips of other notable events and/or time-lapse images of game progress), as described elsewhere herein.

As noted in relation to other techniques herein, it will be appreciated that the above methods may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, and referring again to Figure 1, in a summary embodiment of the present description a system (e.g. entertainment device 10) for identifying an event that is graphically acknowledged within a sequence of images, comprises a processor (e.g. CPU 20, GPU 30, or a combination of the two) configured (for example by suitable software instruction) to implement the steps of defining one or more regions of respective images in which a graphical indication of acknowledgement will occur, identifying a change in content between successive images, within one or more of the defined regions, that exceeds a predetermined threshold, defining the one or more defined regions comprising an identified change as candidate acknowledgement images, and selecting for output one or more of the candidate acknowledgement images, or respective images of the sequence of images that comprise such candidate acknowledgement images, as described elsewhere herein.

Instances of this summary embodiment implementing the methods and techniques described herein (for example by use of suitable software instruction) are envisaged within the scope of the application, including but not limited to that:
- the processor is further configured to implement the steps of obtaining a database of data items each representing one of a plurality of acknowledged events, comparing data representing at least a first a candidate acknowledgement image with one or more data items in the database, and identifying an acknowledged event for output if the candidate acknowledgement image matches a data item in the database to a predetermined matching threshold degree, as described elsewhere herein; and
- the processor is further configured to implement the steps of detecting whether a change in content between successive whole images exceeds a predetermined threshold at the same time that a change in content within one or more of the defined regions of those images exceeds a predetermined threshold, and if so, not identifying the change in the one or more defined regions as indicating a graphically acknowledged event, as described elsewhere herein.

It will be appreciated that such techniques can be used to drive the automatic generation of a summary video of at least some events, whether predetermined, supplementary, or user-driven, for example by storing or flagging to retain video frames for a short period preceding, and a short period following, the identified events. Optionally other image frames may be sampled periodically (and/or based on any other criteria, such as being candidate events) to provide a 'fast-forward' summary of the game between the more normal playback of the events, to create a compressed but contextually coherent summary of game play. Such a summary may be useful to a user who has, for example, been on holiday and may have forgotten where they are in the game.

### Database Compilation

As noted elsewhere herein, a preliminary step for the techniques herein is the creation of a database that indicates notable events within the game. It was suggested that this may be prepared by the developer or publisher of the game. However, it would be a potentially laborious job for a reviewing person (or group of people) to do, as it may involve playing through many permutations of the game to identify all the notable events within it, which may number in the hundreds or more. Furthermore, it may be difficult from a technical perspective for such a person to select a representative image within or at N frames from a scene cut (where N is typically within the order of 10 frames, and so only a fraction of a second) to be represented within the database.

Accordingly, to assist such a reviewing person, an automatic shortlisting of candidate events is proposed.

### First approximation

Given footage of a game (either generated live or recorded), then to a first approximation a system could identify all scene cuts, e.g. by identifying a change in content between successive images that exceeds a predetermined threshold, using the techniques described elsewhere herein. The system could then provide candidate images that are at the correct frame relative to the cut by using the same processes again as described elsewhere herein. This would reduce the amount of reviewing time required and the difficulty of selecting an image that would be handled / compared consistently by the subsequent event detector.

However, such a first approximation will capture a large number of unwanted scene cuts, such as when a player goes to their inventory or journal (which results in significant changes in displayed image, but are unrelated to game events), or when the player dies and is presented with an option screen and/or restarts at a spawning location.

### Second approximation

Accordingly to a second approximation, all scene cuts are identified for two or more independently generated / recorded instances of footage of the game (i.e. not different views of the same instance of game play, but from separate instances of game play), for example sourced from quality assurance testers or early adopters of the game.

As a result a perceptual hash and the corresponding image from the video for each identified scene cut are thus obtained for two or more runs through the game - or through specific parts of the game, if the database is compiled piece-wise for different areas, quests, story branches and the like, for example due to some notable events in the game being mutually exclusive to other notable events.

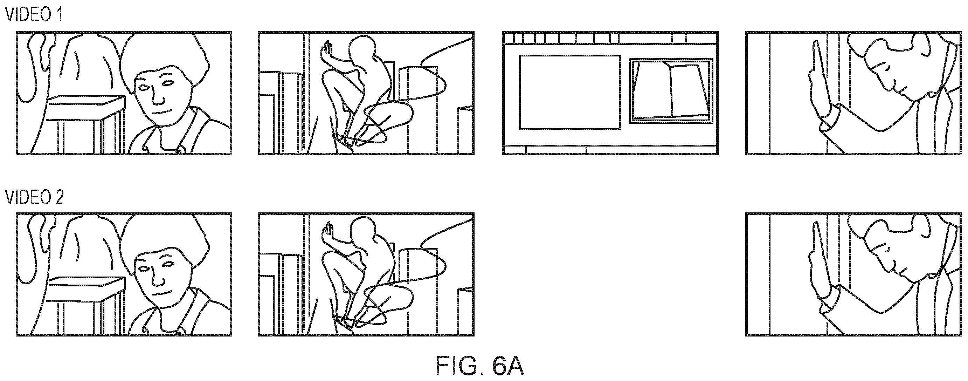

Referring now to Figure 6A, detected scene cuts for two video sources are obtained. Figure 6A shows an example set of scene cuts where, for a first video source, four scene cuts have been detected, and for a second video source, only three scene cuts have been detected.

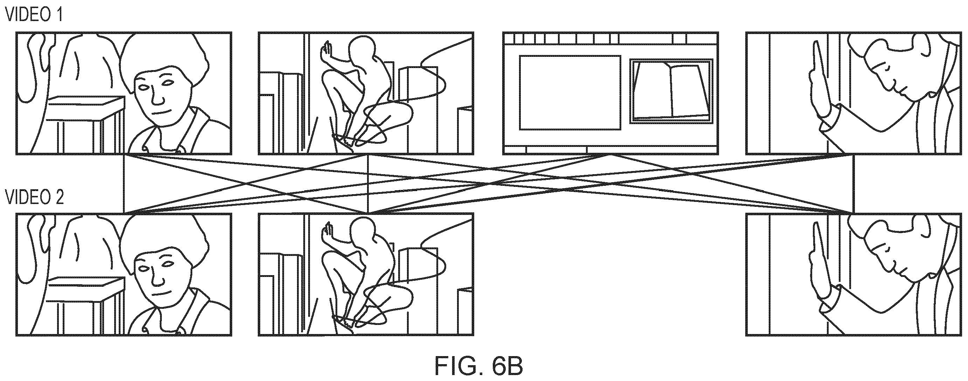

Referring to Figure 6B the detected cuts are then sequentially aligned, for example by comparing perceptual hashes, optional key points, and/or corresponding images from each video feed, for example within a ±2,3,4,5, or more event window, to find the best match over a series of cuts. This is illustrated in Figure 6B by lines between the images, identifying the search for closest matches. The series alignment with the overall best matching score is the winning series alignment.

The series can correspond to the whole video footage, but typically benefits from being shorter, for example re-setting the alignment task every 5, 10, 20, or so matches, or based on a proportion of the matches in the sequence (e.g. 10%), or on a predefined script or task list as described later herein. The limit may be determined empirically.

In Figures 6A and 6B, it is clear that in the first video the user accessed their in-game journal, and this was detected as a cut. However, this did not happen in the second video, and so there is no corresponding event in the sequence derived for that second video. When the sequences are aligned, the lack of correspondence is clear.

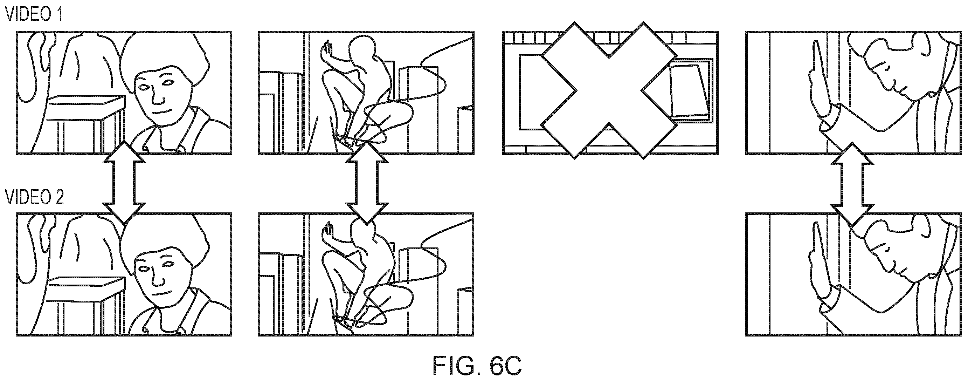

Consequently, and referring now to Figure 6C, the inconsistent scene cut can then be discarded as a candidate event. Put another way, those events with an aligned match between the sequences of events can be retained.

In this way, false positive events can be reduced.

In a test of this technique, 18 hours of game footage generated just under 9,000 detected scene cuts, and this was reduced to under 500 via automatic cross checking with two independent sources of the footage. As a result the workload of a reviewing person to determine and accurately select notable events with the game footage was massively reduced.

It will be appreciated that whilst footage from two sources is sufficient to implement this approach, using three or more sets of independent footage enables more certainty with a majority-vote approach to whether a scene cut is or is not an event - for example it is possible that in the example of Figure 4, the second player simply manage to miss a notable event relating to their in-game journal (or some other content, dependent on the game). If it was an intended event, it is likely that a majority of players would access the in-game journal (or, more generally, a threshold proportion that may be less than a majority by of a significant number). Alternatively, if it was not an intended event, then it is likely that the majority of players would not have accesses the in-game journal.

In this way, false positive events can be reduced with greater certainty.

Whilst the approach illustrated in Figures 6A-C has been referred to as sequentially aligning the detected cuts, more generally it comprises matching detected cuts from one video source with those of one or more other video sources. Optionally the source with the greatest number of detected cuts may be chosen as the reference to compare the others against. Where the detected cuts are in a single or branching sequence or set of sub-sequences, or have associated timestamp, progress, or dependency data associated with them, then in effect the matching at least logically aligns the detected cuts of the or each other video source with the detected cuts of the reference source, as seen in Figures 6A-C.

### User-driven events

However, it will be appreciated that in between the second and last events in Figures 6A-C, it is possible that some users may have either picked up a weapon, or found an item, that prompted them to access their journal, and so a detected scene-cut to the journal is commonplace even though it does not relate to an event in the game per se. Hence in the example of figure 6, both sets of footage may contain a scene cut corresponding to journal access and it would be treated as a probably event for subsequent assessment by the reviewing person. In this case, even a majority-rule approach may not remove the false-positive event.

Optionally this is acceptable, and the reviewing person making the final decision on notable events can deselect it as part of their overall simplified task.

However, it will be appreciated that user-driven events (such as summoning menu interfaces, and, in effect, player death) are qualitatively different to game-driven events that create scene cuts; generally the game driven events will occur in all instances of the game footage, and each one will typically look different.

By contrast user-driven events such as menu access and death screens tend to be distributed more randomly within the wider unfolding gameplay and across the corresponding sets of footage, and also typically look the same.

Hence optionally to further assist the reviewing person making the final decision on notable events, the system may identify candidate events that do not have corresponding instances in one or more other recordings, and then evaluate if these events appear more than a threshold time within a candidate event sequence (for example by comparing their perceptual hashes across the sequence).

Hence for example over the course of the game, user access to the journal will not be wholly consistent between separate video recordings, and so the hashes for one or more such inconsistent events can be compared with all the other candidate events to detect how many similar instances there are (whether they match or have a majority match or not). If there is more than a threshold number of repeating instances (for example if the user has accessed the journal more than J times during game play), then it can be identified as a repeating and non-consistent event within the sequence. A similar approach may identify multiple death scenes.

Repeating and non-consistent events within the sequence can optionally be flagged as such, for example to then provide a visual warning cue to the reviewing person so they can more easily decide to delete the candidate event, or alternatively they can be deleted from the list of candidate events automatically. In this case optionally, one (e.g. the first) instance of each such event can be retained within the candidate event set so that the reviewing person still has the option to retain it as an event in the database.

In this way, repetitive interruptions to the game that may otherwise look like scene cuts can also be automatically pruned from the candidate event set.

Optionally, the process can be repeated for the original candidate event sequences with the repetitive interruptions removed, in case this improves the sequence alignment / matching and identified additional events that might otherwise not have aligned and been retained.

Alternatively, such repeated detected scene-cuts can be removed from respective sets/sequences of detected scene-cuts as a preliminary step before any matching / alignment step.

In any event, once a pruned candidate event set has been generated for review by the reviewing person, optionally key points for at least some of the remaining images may be generated, so that the data for the data base is ready for inclusion. Alternatively, such key point data can be generated as part of the candidate event identification process for each video, but this would be wasteful of resources as most of the key point data would be redundant. Again alternatively, the key point data could be generated after the reviewing person has finalised the database, although it is possible that the editing/selection software for the review task is separate from the event identification software, and so creating it during the identification stage provides a more efficient workflow.

### Non-linear and open-world games

It will be appreciated that not all games use a story driven, sequential, or so-called 'linear' structure. Typically, a player may be on one quest and then might be distracted to explore a side quest or the like. As a result it would be possible for two independent sets of gameplay footage to have otherwise matching sequences of events interspersed with other unrelated events, and sub-sets of event occurring in different orders due to different choices made by the player.

These issues are why it is useful to have an end-user event recognition system that can make reference to an authoritative database to identify events as they occur, but for the construction of the database itself - and the automatic evaluation of scene cuts by comparing different recordings of game play - it could be problematic.

Accordingly, it is preferable though not essential that the video footage is recorded for people playing the game according to a script or task list, or according to a decision rule based on following in-game prompts or the like, to provide greater consistency for the sequence of events encountered in independent instances of game play. Such scripts or task lists may already be provided to quality and assurance (Q&A) testers who are reviewing the game, and so appropriate lists may be provided to them. Alternatively the scripts or task lists already used by Q&A testers may themselves be compared to identify which sets of footage from the Q&A testing phase should correspond with each other, thereby also enabling automatic assembly of comparison footage across the whole Q&A process (and hence typically across all aspects of the game).

It will be appreciated that this approach can also be used with more linear games, and optionally to segment the video footage for such games in to smaller parts for comparison, for example based on Q&A scripts and task lists.

It will also be appreciated that any or all of the techniques herein relating to database compilation and use can also be applied to regions or partial images to generate candidate databases for supplementary events or popups, and / or for game-driven messages.

### Summary of database compilation

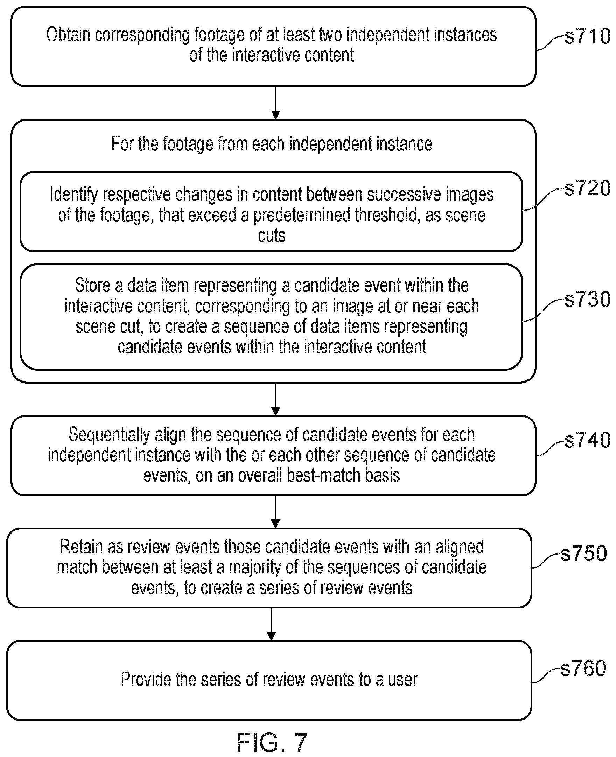

Referring now to Figure 7, in a summary embodiment of the present description, a method of identifying notable events within an interactive content comprises the following steps.

In a first step s710, obtaining corresponding footage of at least two independent instances of the interactive content, as described elsewhere herein.

For the footage from each independent instance,
- in a second step s720, identifying respective changes in content between successive images of the footage, that exceed a predetermined threshold, as scene cuts, and
- in a third step s720 storing (e.g. in a database) a data item representing a candidate event within the interactive content, corresponding to an image at or near each scene cut, to create a sequence candidate events within the interactive content, represented by the data items, as described elsewhere herein. It will be appreciated that candidate events and the data items that represent them can be considered synonymous.

In a fourth step s740, matching (e.g. sequentially aligning) the set or sequence of candidate events for each independent instance with the or each other sequence of candidate events (for example on an overall best-match basis for the set or sequence, or for respective sub-sets or sub-sequences thereof), as described elsewhere herein. Hence for example data with the respective data items, such as a perceptual hash, key points, and/or the image itself (or a reduced resolution version thereof) may be used as the basis for comparison and matching, as described elsewhere herein.

In a fifth step s750, retaining as review events those candidate events with a match (e.g. an aligned match) between at least a majority of the sets or sequences of candidate events, to create a set or series of review events, as described elsewhere herein.

And in a sixth step s760, providing (e.g. in a database) the set or series of review events to a user (e.g. the reviewing person), as described elsewhere herein.

It will be apparent to a person skilled in the art that variations in the above method corresponding to operation of the various embodiments of the apparatus as described and claimed herein are considered within the scope of the present invention, including but not limited to that:
- the data items each comprise at least a perceptual hash of the respective image, as described elsewhere herein;
- the interactive content comprises (e.g. only comprises) one or more selected from the list consisting of: a quest in a game, play within a region of a game, following a story branch of a game, a predetermined list of activities to conduct within a game, and a play-through of some or all of a game, as described elsewhere herein;
- the step of retaining review events comprises also retaining candidate events, but including metadata (e.g. a flag) to differentiate the remaining candidate events from the review events (e.g. as a visual cue for the reviewing person), as described elsewhere herein;
- the step of retaining review events comprises the following steps: identifying candidate events that do not have a match or an aligned match between a threshold number of the sequences of candidate events, as unreliable events (here for example the threshold can correspond to a majority, or to an all-minus U criterion where U equals one of 1, ..., half the number of sets), counting within a respective set or sequence of candidate events the number of unreliable events that match each other according to a matching criterion (e.g. the positive matching threshold, or a different, lower threshold), and if the count exceeds a predetermined threshold for a set of mutually matching unreliable events, then either marking some or all of the set of mutually matching unreliable events as such, or deleting some (e.g. all but one) or all of the set of mutually matching unreliable events from the sequence of candidate events as part of creating the series of review events, as described elsewhere herein;
   - In this instance, optionally repeating the step of matching or sequentially aligning the set or sequence of candidate events for each independent instance with the or each other set or sequence of candidate events, after deleting some or all of the set of mutually matching unreliable events from the set or sequence of candidate events, and before creating the set or series of review events (for example to possibly further improve the sequence alignment), as described elsewhere herein;
- The method comprising the steps of, for each of some or all of the images respectively corresponding to a review event, generating key point data comprising pixel location data for K pixels of the image that best meet a predetermined criterion, and storing the key point data in association with the data item for the review event, as described elsewhere herein;
- the sets of candidate events are sequential, and the step of matching candidate events comprises aligning the sequence of candidate events for each independent instance with the or each other sequence of candidate events, and the step of retaining review events comprises retaining as review events those candidate events with an aligned match between at least a majority of the sequences of candidate events, to create a series of review events, as described elsewhere herein;
- at least some of the set or series of review events, comprising their respective data items, are included in a database as predetermined events for use by a subsequent method of identifying a predetermined event within a sequence of images, as described elsewhere herein.
   - in this instance, optionally the predetermined events are ordered within the database according to one or more criteria selected from the list consisting of the sequence obtained during the sequential alignment, the chronological sequence of occurrence within a game, the chronological sequence of occurrence within one of a region, level, quest, or story branch of a game, the empirically measured most likely sequence of occurrence within a game, the empirically measured most likely sequence of occurrence within one of a region, level, quest, or story branch of a game, and a sequence created by a predetermined list of activities to conduct within a game (e.g. as part of Q&A testing), as described elsewhere herein;
- similarly in this instance, optionally the method comprises the subsequent steps of obtaining the database comprising data items each representing one of a plurality of predetermined events, and for a sequence of images in a current interactive content, identifying a change in content between successive images that exceeds a predetermined threshold, identifying one or more images following the identified change as candidate event images, comparing data representing at least a first a candidate event image with one or more data items in the database, and identifying that a predetermined event has occurred within the sequence of images if a candidate event image matches a data item in the database to a predetermined matching threshold degree, as described elsewhere herein.

It will be appreciated that the above methods may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

### EMBODIMENTS

Although the present invention is defined in the claims, it should be understood that the present invention can also (alternatively) be defined in accordance with the following embodiments:
1. A method of identifying an event that is graphically acknowledged within a sequence of images, comprising the steps of:
   defining one or more regions of respective images in which a graphical indication of acknowledgement will occur;
   selecting at least a first defined region as a candidate acknowledgement image; and
   selecting for output one or more of the candidate acknowledgement images, or respective images of the sequence of images that comprise such candidate acknowledgement images.
2. The method of embodiment 1, in which the step of selecting at least a first defined region comprises the steps of: identifying a change in content between successive images, within one or more of the defined regions, that exceeds a predetermined threshold; and
   selecting the one or more defined regions comprising an identified change.
3. The method of embodiment 1, in which the step of selecting at least a first defined region comprises the step of:
   selecting at least a first defined region in individual images separated by a plurality of images in the sequence of images as a candidate acknowledgement image.
4. The method of embodiment 1, comprising the steps of:
   obtaining a database of data items each representing one of a plurality of acknowledged events;
   comparing data representing at least a first a candidate acknowledgement image with one or more data items in the database; and
   identifying an acknowledged event for output if the candidate acknowledgement image matches a data item in the database to a predetermined matching threshold degree.
5. The method of embodiment 4, in which:
   the database comprises an event ID for at least some acknowledged events, and the method comprises the step of:
   notifying the event ID of an identified acknowledged event to one or more selected from the list consisting of:
   i. a user-help process;
   ii. a game summarisation process;
   iii. a social feed process;
   iv. a save-game process;
   v. a save video-feed process; and
   vi. a telemetry process.
6. The method of embodiment 4 or embodiment 5, in which:
   the data items comprise representations of image regions comprising a graphical acknowledgement of an event; and
   the data representing at least a first a candidate acknowledgement image is a corresponding representation of a respective image region.
7. The method of embodiment 6, in which the representation of an image region comprises a perceptual hash of that region.
8. The method of any preceding embodiment, in which the step of defining one or more regions comprises one or more selected from the list consisting of:
   i. obtaining definitions from region configuration data associated with a content from which the images in the sequence of images are generated; and
   ii. detecting changes that exceed a predetermined threshold within one or more tiled regions around some or all of a periphery of the images in the sequence of images.
9. The method of embodiment 2, comprising the steps of:
   detecting whether a change in content between successive whole images exceeds a predetermined threshold at the same time that a change in content within one or more of the defined regions of those images exceeds a predetermined threshold;
      and if so,
   not identifying the change in the one or more defined regions as indicating a graphically acknowledged event.
10. The method of any preceding embodiment, comprising the steps of:
   if a first region is defined as a candidate acknowledgement image, then
   performing an analysis on a further, separate defined region of the same image for an indication of graphical acknowledgement of an event.
11. The method of any preceding embodiment, comprising the step of:
   recognising text within the candidate acknowledgement image, using one or more selected from the list consisting of:
   i. a perceptual hash of predetermined text; and
   ii. optical character recognition.
12. The method of any preceding embodiment, comprising the step of:
   storing a predetermined number of adjacent images within the sequence of images, including the image that comprises a selected candidate acknowledgement image, as a video clip of the graphically acknowledged event.
13. The method of embodiment 12, comprising the step of:
   compiling a summary video comprising a plurality of stored video clips of graphically acknowledged events.
14. A computer program comprising computer executable instructions adapted to cause a computer system to perform the method of any one of the preceding embodiments.
15. A system for identifying an event that is graphically acknowledged within a sequence of images, comprising a processor configured to implement the steps of:
   defining one or more regions of respective images in which a graphical indication of acknowledgement will occur;
   selecting at least a first defined region as a candidate acknowledgement image; and
   selecting for output one or more of the candidate acknowledgement images, or respective images of the sequence of images that comprise such candidate acknowledgement images.
16. The system of embodiment 15, in which the processor is further configured to implement the steps of:
   identifying a change in content between successive images, within one or more of the defined regions, that exceeds a predetermined threshold; and
   selecting the one or more defined regions comprising an identified change.
17. The system of embodiment 15, in which the processor is further configured to implement the step of:
   selecting at least a first defined region in individual images separated by a plurality of images in the sequence of images as a candidate acknowledgement image.
18. The system of any one of embodiments 15 to 17, in which the processor is further configured to implement the steps of:
   obtaining a database of data items each representing one of a plurality of acknowledged events;
   comparing data representing at least a first a candidate acknowledgement image with one or more data items in the database; and
   identifying an acknowledged event for output if the candidate acknowledgement image matches a data item in the database to a predetermined matching threshold degree.

## Claims

1. A method of identifying an event that is graphically acknowledged within a sequence of images, the method comprising:
defining (s910) one or more regions of respective images in which a graphical indication of acknowledgement will occur;
selecting at least a first defined region as a candidate acknowledgement image; and
selecting (s940) for output one or more of the candidate acknowledgement images, or respective images of the sequence of images that comprise such candidate acknowledgement images.

2. The method of claim 1, in which selecting at least a first defined region comprises:
identifying (s920) a change in content between successive images, within one or more of the defined regions, that exceeds a predetermined threshold; and
selecting the one or more defined regions comprising an identified change.

3. The method of claim 1, in which selecting at least a first defined region comprises:
selecting at least a first defined region in individual images separated by a plurality of images in the sequence of images as a candidate acknowledgement image.

4. The method of claim 1, comprising:
obtaining a database of data items each representing one of a plurality of acknowledged events;
comparing data representing at least a first a candidate acknowledgement image with one or more data items in the database; and
identifying an acknowledged event for output if the candidate acknowledgement image matches a data item in the database to a predetermined matching threshold degree.

5. The method of claim 4, in which:
the database comprises an event ID for at least some acknowledged events, and the method comprises:
notifying the event ID of an identified acknowledged event to one or more selected from a list consisting of:
i. a user-help process;
ii. a game summarisation process;
iii. a social feed process;
iv. a save-game process;
v. a save video-feed process; and
vi. a telemetry process.

6. The method of claim 4 or claim 5, in which:
the data items comprise representations of image regions comprising a graphical acknowledgement of an event; and
the data representing at least a first a candidate acknowledgement image is a corresponding representation of a respective image region.

7. The method of claim 6, in which the representation of an image region comprises a perceptual hash of that region.

8. The method of any preceding claim, in which defining one or more regions comprises one or more selected from a list consisting of:
i. obtaining definitions from region configuration data associated with a content from which the images in the sequence of images are generated; and
ii. detecting changes that exceed a predetermined threshold within one or more tiled regions around some or all of a periphery of the images in the sequence of images.

9. The method of claim 2, comprising:
detecting whether a change in content between successive whole images exceeds a predetermined threshold at the same time that a change in content within one or more of the defined regions of those images exceeds a predetermined threshold;
and if so,
not identifying the change in the one or more defined regions as indicating a graphically acknowledged event.

10. The method of any preceding claim, comprising:
if a first region is defined as a candidate acknowledgement image, then
performing an analysis on a further, separate defined region of the same image for an indication of graphical acknowledgement of an event.

11. The method of any preceding claim, comprising:
recognising text within the candidate acknowledgement image, using one or more selected from a list consisting of:
i. a perceptual hash of predetermined text; and
ii. optical character recognition.

12. The method of any preceding claim, comprising:
storing a predetermined number of adjacent images within the sequence of images, including the image that comprises a selected candidate acknowledgement image, as a video clip of the graphically acknowledged event.

13. The method of claim 12, comprising:
compiling a summary video comprising a plurality of stored video clips of graphically acknowledged events.

14. A computer program comprising computer executable instructions adapted to cause a computer system to perform the method of any one of the preceding claims.

15. A system for identifying an event that is graphically acknowledged within a sequence of images, comprising a processor configured to perform the method of any one of claims 1 to 13.
